# EUROPEAN PATENT APPLICATION

(11) **EP 3 499 259 A1**
(43) Date of publication of application: **19.06.2019**
(21) Application number: 17206777.9
(22) Date of filing: 12.12.2017
(51) Int. Cl.: G01S 3/08

(54) **DIRECTION FINDER AND METHOD FOR MOBILE DIRECTION FINDING**

(71) Applicant: Rohde & Schwarz GmbH & Co. KG, 81671 München (DE)
(72) Inventor: Strobel, Philipp, 80336 München (DE)
(74) Representative: Prinz & Partner mbB

(57) **Abstract**

A direction finder (10) for mobile direction finding of a target is described. The direction finder (10) comprises at least one vertically polarized directional antenna unit (14), at least one horizontally polarized directional antenna unit (16) and a control and analyzing unit (12) connected with the directional antenna units. The control and analyzing unit is configured to switch to and fro between the vertically polarized directional antenna unit (14) and the at least one horizontally polarized directional antenna unit (16) in an automatic manner after at least one complete scanning of the respective directional antenna unit (14, 16). Further, a method for mobile direction finding of a target is described.

## Description

The invention relates to a direction finder for mobile direction finding of a target as well as a method for mobile direction finding of a target.

Direction finding is known for many years wherein different kinds of direction finders are used in order to locate a target, which is also known as direction finding of a target. Usually, the signals to be located are transmitted with unknown polarity. In addition, the polarization of the signals to be located may change due to reflections that occur in the travel of the signal between the signal emitter and the direction finder. Thus, the signals to be located are received by the direction finder with a random and varying polarization.

However, the direction finder known in state of the art typically have a directional antenna that is configured to detect signals of a certain polarization wherein the accuracy of the direction finding decreases with an increasing deviation of the polarization of the signals received compared to the kind of polarization of the directional antenna. In other words, the signals received by the direction finder can only be used in parts. Particularly, only those signals received can be used for locating the target that have a polarization which mainly corresponds to the one of the directional antenna. Accordingly, the random and varying polarization makes it difficult to identify the respective signals and to locate the target with sufficient accuracy.

Further, direction finders are known in the state of the art which have differently polarized directional antennas such that the direction finder can be used for locating signals of a certain polarization as the polarization of the antenna is set manually. However, the certain polarization has to be actively selected by the user prior to the direction finding.

Thus, only users having experience in direction finding may use such a direction finder. Moreover, signals with varying polarization cannot be located with a high accuracy due to the fact that only the direction finder is only sensitive for the selected polarization such that only those signals can be located with high accuracy, but no signals with a varying polarization or a polarization being different to the one selected previously.

Accordingly, there is a need for a direction finder as well as a method for mobile direction finding that ensure to locate signal sources (targets) easily that emit signals which are received by the direction finder with a varying polarization.

The invention provides a direction finder for mobile direction finding of a target, comprising at least one vertically polarized directional antenna unit, at least one horizontally polarized directional antenna unit and a control and analyzing unit connected with the directional antenna units. The control and analyzing unit is configured to switch to and fro between the vertically polarized directional antenna unit and the at least one horizontally polarized directional antenna unit in an automatic manner after at least one complete scanning of the respective directional antenna unit.

Further, the invention provides a method for mobile direction finding of a target by using a directional finder, with the following steps:
- Performing at least one scanning with the direction finder, and
- Switching to and fro between at least one vertically polarized directional antenna unit of the direction finder and at least one horizontally polarized directional antenna unit in an automatic manner after the completed scanning via a control and analyzing unit of the direction finder.

Accordingly, signals having a random and varying polarization can be located appropriately by using the direction finder according to the invention or by using a method according to the invention. The different directional antenna units are automatically toggled (switch to and fro) in a periodic manner such that signals with substantially all polarizations can be processed. In fact, signals with varying polarization can be located with a lower directional finding error compared to the techniques known in the state of the art. In general, the accuracy of the direction finding is increased.

Generally, the term mobile direction finding means that the direction finder itself is moved relatively to the target during the direction finding process. Accordingly, the appropriate direction finder may be a mobile one.

According to an aspect, the at least one vertically polarized antenna unit and/or the at least one horizontally polarized antenna unit are/is an antenna array, in particular a circular antenna array. Thus, the respective polarized antenna unit comprises several antenna elements that may be controlled individually, for instance during the scanning of the respective directional antenna unit and/or the measurement phase.

Particularly, the several antenna elements of each polarized antenna unit are arranged in a circular manner in order to increase the (bearing) accuracy of the respective directional antenna unit, namely the one of the direction finder as direction finder errors due to coupling effects between the antenna elements are reduced due to the symmetrical arrangement of the antenna elements.

Another aspect provides that the control and analyzing unit is configured to receive the measurement results and to analyze the measurement results. The location of the signal source (target) is therefore determined by the direction finder itself, in particular its control and analyzing unit.

Particularly, the control and analyzing unit is configured to determine the result of the position finding of the target based on the measurement results. Hence, the direction finder is configured to provide all relevant information directly to the user, in particular in real time.

According to another aspect, the at least one vertically polarized antenna unit and/or the at least one horizontally polarized antenna unit are/is connected to the control and analyzing unit via a switching unit. The switching unit, also called switching matrix, ensures the toggling of both directional antenna units such that the vertically polarized directional antenna unit is activated wherein the horizontally polarized direction antenna unit is deactivated and vice versa.

The switching unit may be part of the control and analyzing unit.

Particularly, the switching unit is connected to each antenna element of the respective antenna array such that the different antenna elements can be activated and deactivated independently of the other antenna elements. In fact, the scanning of the respective directional antenna unit is also controlled via the switching unit.

Furthermore, a display unit may be provided that is connected to the control and analyzing unit. Thus, the display unit may graphically provide information to the user such that the respective information can be gathered easily.

For instance, the display unit is configured to graphically illustrate the output of the control and analyzing unit, in particular the measurement results and/or the result of the position finding of the target. The display unit may inform the user about the output of the direction finding wherein the measurement results may be displayed directly or after the analyzing step performed by the control and analyzing unit such that the result of the position finding, namely the location, of the target is graphically illustrated on a map that is also displayed electronically.

Generally, the target may be a stationary target or a moving target. Accordingly, the direction finder for mobile direction finding can locate a stationary target or a moving target with high accuracy due to the fact that the differently polarized directional antenna units are switched over in a periodic manner.

An aspect provides that the scanning is performed for the at least one vertically polarized directional antenna unit and the at least one horizontally polarized directional antenna unit. As mentioned, the scanning may be performed at least once for the respective directional antenna unit wherein the scanning is performed for each directional antenna unit at least once. Generally, the scanning is also known as a sampling.

As already mentioned, the respective directional antenna unit comprises several antenna elements that may be controlled individually, in particular for the scanning step(s).

Another aspect provides that measurement results are obtained during the switching to and fro between the directional antenna units. Accordingly, signals with varying polarization can be located appropriately due to the fact that the direction finder is switched to and fro (toggled) between the differently polarized directional antenna units during the direction finding process.

Thus, signals with varying polarization can be detected with higher accuracy as the direction finder is sensitive to different polarizations, namely a vertical polarization and a horizontal polarization as well as intermediate ones due to the fast and automatic switching process while performing the direction finding, namely during the direction finding process.

Moreover, the result of the position finding of the target may be determined based on the measurement results. Thus, the position of the target can be determined appropriately even though the target emits signals that are received by the direction finder with random and varying polarization.

For instance, the output of the control and analyzing unit is graphically displayed via a display unit, in particular wherein the output of the control and analyzing unit is assigned to measurement results and/or the result of the position finding of the target. Accordingly, the user of the direction finder gets informed about the measurement results and/or the location of the target. This information can be easily recognized by the user due to the fact that it is graphically displayed on the respective display unit. The display unit may be part of the direction finder itself. Further, the display unit may be provided by another device that receives the output for graphically illustrating the output of the control and analyzing unit.

Furthermore, the switching may be performed in a time-based manner. For instance, the switching is performed in a periodically manner such that it is ensured that signals with varying polarization can be located with a low direction finding error due to the fact that the direction finder switches to and fro between the differently polarized directional antenna units in a fast manner.

The invention will now be described with reference to the embodiments shown in the enclosed drawings. In the drawings,
- Figure 1 is a schematic representation of a direction finder according to the invention,
- Figure 2 is another schematic representation of a direction finder according to the invention, and
- Figure 3 is a schematic overview representing a method according to the invention.

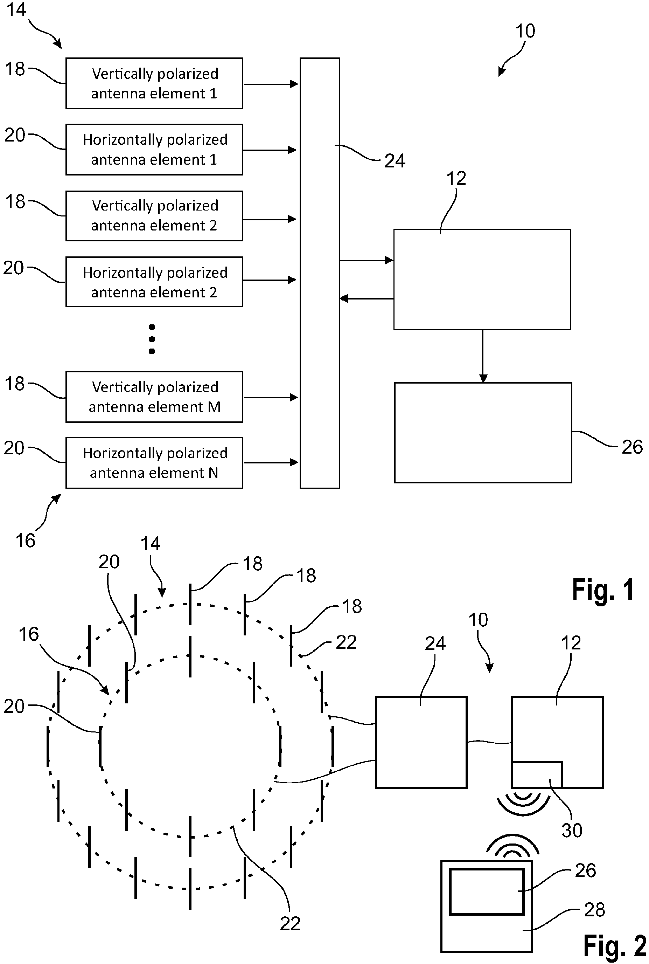

In Figure 1, a direction finder 10 for mobile direction finding of a target is shown that comprises a control and analyzing unit 12 that is connected to a vertically polarized directional antenna unit 14 as well as a horizontally polarized directional antenna unit 16.

The vertically polarized directional antenna unit 14 as well as the horizontally polarized directional antenna unit 16 each comprise several antenna elements 18, 20, namely M vertically polarized antenna elements 18 and N horizontally polarized directional antenna elements 20.

The respective antenna elements 18, 20 of a certain antenna unit 14, 16 may be connected with each other in order to establish an antenna array 22.

As shown in the embodiment of Figure 2, the antenna elements 18, 20 may be arranged in a circular manner such that the vertically polarized antenna unit 14 as well as the horizontally polarized unit 16 each establish a circular antenna array 22.

The directional antenna units 14, 16 are each connected to the control and analyzing unit 12 via a switching unit 24 that is connected with each individual antenna element 18, 20 of the directional antenna units 14, 16.

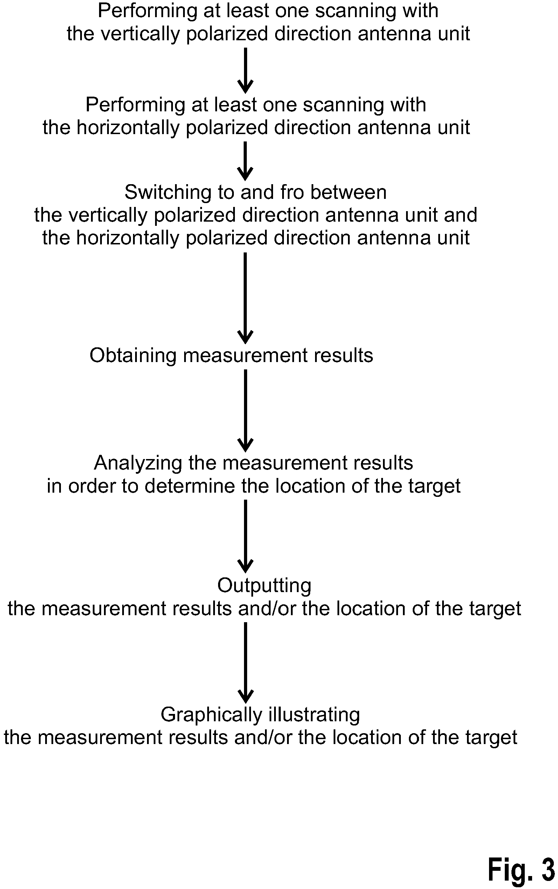

The switching unit 24 is controlled by the control and analyzing unit 12 in order to activate and/or deactivate the individual antenna elements 18, 20 of the respective directional antenna unit 14, 16 as will be described later with respect to Figure 3. Accordingly, the switching unit 24 corresponds to a switching matrix.

Moreover, the direction finder 10 comprises a display unit 26 that is connected to the control and analyzing unit 12 such that the output of the control and analyzing unit 12 may be graphically displayed on the display unit 26.

As shown in Figure 2, the display unit 26 may be provided by a separate device 28, for instance a user end device, which communicates with the direction finder 10 wirelessly in order to transmit the output of the control and analyzing unit 12 for being displayed on the display unit 26. Accordingly, the direction finder 10 may have a communication interface 30 which is configured to communicate with the separate device 28 in order to transmit the output of the control and analyzing unit 12 wirelessly to the other device for displaying purposes as mentioned above.

In Figure 3, an overview representing a method for mobile direction finding of the target by using the direction finder 10 according to Figure 1 is shown.

Accordingly, the direction finder 10 performs in the beginning at least one scanning with the respective directional antenna unit 14, 16. For instance, the appropriate antenna elements 18, 20 of the respective directional antenna unit 14, 16 is controlled via the switching unit 24.

After the completion of the scanning, the measurement phase starts in order to locate a target emitting signals that are received with varying polarization.

The control and analyzing unit 12 controls the switching unit 24 such that the direction finder 10 is switched to and fro between the vertically polarized directional antenna unit 14 and the horizontally polarized directional antenna unit 16 automatically without any manual input. Thus, the individual antenna elements 18, 20 of the respective directional antenna unit 14, 16 are activated and deactivated in a periodic manner via the switching unit 24. This ensures that signals having different polarities can be sensed appropriately by the direction finder 10 as both directional antenna units 14, 16 are activated within a certain time period of the measurement phase.

The switching is done very fast without any threshold value, for instance only in a time-based manner (triggered by the control and analyzing unit 12 via the switching unit 24). Accordingly, signals with a polarization being different to a pure vertical polarization or a pure horizontal one can be sensed appropriately by the direction finder 10.

In general, the fast and automatic switching ensures that signals of targets can be located which have a random and varying polarization due to the fact that the active or rather effective antenna unit of the direction finder 10 during the measurement phase corresponds to a mix of the differently polarized directional antenna units 14, 16 within a certain time period due to the toggling between the differently polarized antenna units 14, 16. Thus, the direction finding error of signals with varying polarization is reduced which in turn improves the bearing accuracy of the direction finding.

The measurement results obtained via both directional antenna units 14, 16 during the measurement phase in which the switching unit 24 switches to and fro between both directional antenna units 14, 16, are forwarded to the control and analyzing unit 12 for analyzing purposes.

The control and analyzing unit 12 is configured to determine the location of the target, namely the result of the position finding of the target, based on the measurement results obtained.

The result of the position finding of the target, namely the location of the target, may be outputted afterwards as a result which is then displayed on the display unit 26 of the direction finder 10 itself for informing the user appropriately. Alternatively, the output of the control and analyzing unit 12 is displayed on the separate device 28 comprising the display unit 26.

Furthermore, the output of the control and analyzing unit 12 may comprise the pure measurement results obtained by the respective directional antenna units 14, 16 such that the user can analyze the measurement results obtained by its own, in particular via the separate device 28.

Therefore, a direction finder 10 as well as a method for mobile direction finding of a target are provided which ensure that signals with a random and varying polarization can be located with high accuracy due to the automatic and periodically switching between both differently polarized antenna units 14, 16 of the direction finder 10.

## Claims

1. A direction finder (10) for mobile direction finding of a target, comprising at least one vertically polarized directional antenna unit (14), at least one horizontally polarized directional antenna unit (16) and a control and analyzing unit (12) connected with the directional antenna units (14, 16), wherein the control and analyzing unit (12) is configured to switch to and fro between the vertically polarized directional antenna unit (14) and the at least one horizontally polarized directional antenna unit (16) in an automatic manner after at least one complete scanning of the respective directional antenna unit (14, 16).

2. The direction finder (10) according to claim 1, wherein the at least one vertically polarized antenna unit (14) and/or the at least one horizontally polarized antenna unit (16) are/is an antenna array (22), in particular a circular antenna array.

3. The direction finder (10) according to claim 1 or 2, wherein the control and analyzing unit (12) is configured to receive the measurement results and to analyze the measurement results.

4. The direction finder (10) according to claim 3, wherein the control and analyzing unit (12) is configured to determine the result of the position finding of the target based on the measurement results.

5. The direction finder (10) according to any of the preceding claims, wherein the at least one vertically polarized antenna unit (14) and/or the at least one horizontally polarized antenna unit (16) are/is connected to the control and analyzing unit (12) via a switching unit (24).

6. The direction finder (10) according to any of the preceding claims, wherein a display unit (26) is provided that is connected to the control and analyzing unit (12).

7. The direction finder (10) according to claim 6, wherein the display unit (26) is configured to graphically illustrate the output of the control and analyzing unit (12), in particular the measurement results and/or the result of the position finding of the target.

8. The direction finder (10) according to any of the preceding claims, wherein the target is a stationary target or a moving target.

9. A method for mobile direction finding of a target by using a direction finder, with the following steps:
- Performing at least one scanning with the direction finder (10), and
- Switching to and fro between at least one vertically polarized directional antenna unit (14) of the direction finder (10) and at least one horizontally polarized directional antenna unit (16) in an automatic manner after the completed scanning via a control and analyzing unit (12) of the direction finder (10).

10. The method according to claim 9, wherein the scanning is performed for the at least one vertically polarized directional antenna unit (14) and the at least one horizontally polarized directional antenna unit (16).

11. The method according to claim 9 or 10, wherein measurement results are obtained during the switching to and fro between the directional antenna units (14, 16).

12. The method according to claim 11, wherein the measurement results obtained are analyzed by the control and analyzing unit (12) of the direction finder (10).

13. The method according to claim 11 or 12, wherein the result of the position finding of the target is determined based on the measurement results.

14. The method according to any of the claims 9 to 13, wherein the output of the control and analyzing unit (12) is graphically displayed via a display unit (26), in particular wherein the output of the control and analyzing unit (12) is assigned to measurement results and/or the result of the position finding of the target.

15. The method according to any of the claims 9 to 14, wherein the switching is performed in a time-based manner.
